# EUROPEAN PATENT APPLICATION

(11) **EP 2 292 966 A1**
(43) Date of publication of application: **09.03.2011**
(21) Application number: 10175774.8
(22) Date of filing: 08.09.2010
(51) Int. Cl.: F16L 33/22

(54) **Diversion conduit**

(30) Priority: 08.09.2009 CN 200920222630 U
(71) Applicant: Tong, Zengyao, Zhejiang Province 315000 (CN)
(72) Inventor: Tong, Zengyao, Zhejiang Province 315000 (CN)
(74) Representative: Szabo, Zsolt

(57) **Abstract**

The present invention relates to a diversion conduit, comprising of a water intake connector (1), a water output connector (2) and a conduit body (3). The water intake connector (1) and the water output connector (2) each includes a detachably connected external cap (11) and internal calipers (12). The end of the conduit body (3) is clamped between the external cap (11) and internal calipers (12). The present invention is structurally simple and convenient to use. The connections between the conduit body (3) and the connectors (1,2) are detachable. Use can be restored once the conduit body (3) is fractured, greatly avoiding waste, which, consistent with cost effectiveness, is suitable to be promoted to wide application.

## Description

### Field of Art

The present invention relates to a diversion conduit and particularly to a diversion conduit commonly used for irrigating the greening.

### Background Art

There is a variety of irrigation systems for existing flower beds, lawns and other greening facilities. One of them is to use a diversion conduit to connect the water tap for irrigation; this kind of irrigation system is the most common and simple to construct with low cost, and finds the widest application. However, practice finds that the difference between the conduit body and the connector in material and structure renders the conduit body vulnerable to fracture at the connection with the connector, and that the connection between the conduit body and the connector is a fixed and dead connection. Once the conduit body fractures, the entire diversion conduit will be useless, causing great waste.

It appears that the above existing diversion conduit is obviously inconvenient and imperfect in structure and use, which requires further improvement. It is also one of the significant improvement objectives to develop a newly structured diversion conduit that is structurally simple and convenient to use with detachably connected conduit body and connector so that once the conduit body fractures, its use can be restored.

### Description of the Invention

The purpose of the present invention is to overcome the imperfection of the existing diversion conduits and to provide a newly structured diversion conduit. The technical problem to be solved is to make its structure simple and render it easy to be used with detachably connected conduit body and connector so that once the conduit body fractures, its use can be restored, which makes it more suitable to utilize.

The purpose of the present invention and a solution to the technical problem above is achieved by the following technical means. A diversion conduit proposed according to the present invention comprises a water intake connector, a water output connector and a conduit body. The said water intake connector and water output connector each includes a detachably connected outer cap and internal calipers. The end of the conduit body is clamped between the outer cap and the internal calipers.

The purpose of the present invention and a solution to the technical problem above can be further achieved by the following technical solutions.

As to the aforementioned diversion conduit, the said external cap includes internal threads and internal projection. The minor diameter of the internal thread is smaller than the external diameter of the conduit body, and the internal diameter of the internal projection is almost equal to the external diameter of the conduit body. The internal calipers include external threads and external projection. The external threads match the internal threads of the external cap. The external projection has a trapeziform axis cross section; the external diameter of its end is slightly smaller than the internal diameter of the conduit body while the external diameter of its bottom is slighter greater than the internal diameter of the conduit body. The external cap and the internal calipers are bolted. The end of the conduit body is clamped by the internal projection of the external cap and the external projection of the internal calipers.

As to the aforementioned diversion conduit, the water intake connector comprises a butterfly cap connected via locking piece with the internal calipers of the water intake connector.

As to the aforementioned diversion conduit, the said water intake connector is provided with internal threads and the butterfly cap provided with a projection at the connection with the internal calipers. The end cap of the locking piece is tightly appressed to and bolted with the calipers projection.

As to aforementioned diversion conduit, there are gaskets provided at the connection between the locking piece and the butterfly cap and at the connection between the locking piece and the internal calipers.

To sum up, the connections between the conduit body and connectors are detachable. Use can be restored once the conduit body is fractured, greatly avoiding waste, which, consistent with cost effectiveness, is suitable to be promoted to wide application. The present invention has the above advantages and utility value with great improvements in both the structure and function and obvious improvement in technique, producing easy-to-use and practical effect. The improved function compared with the existing diversion conduits renders it more suitable to utilize.

The above description is the general description of the technical solution of the present invention. To better understand the technical approach of the present invention, implementation can be made by following the description. The above and other purposes, features, and advantages of the present invention will be described and become more apparent from the detailed description of preferred embodiments when read in conjunction with the accompanying drawings.

### Brief Description of the Drawings

FIG 1 is a section representation of the diversion conduit according to the invention.
FIG 2 is an exploded sectional representation of the diversion conduit according to the invention.

### Detailed Description of the Preferred Embodiment

To further elaborate on the technical approach and function to achieve the purpose of the present invention, the above and other purposes, features, and advantages of the present invention will be described and become more apparent from the detailed description of preferred embodiments when read in conjunction with the drawings and preferred embodiments will be referred to when describing in detail the diversion conduit proposed according to the present invention in terms of the embodiment, structure, characteristics and effect.

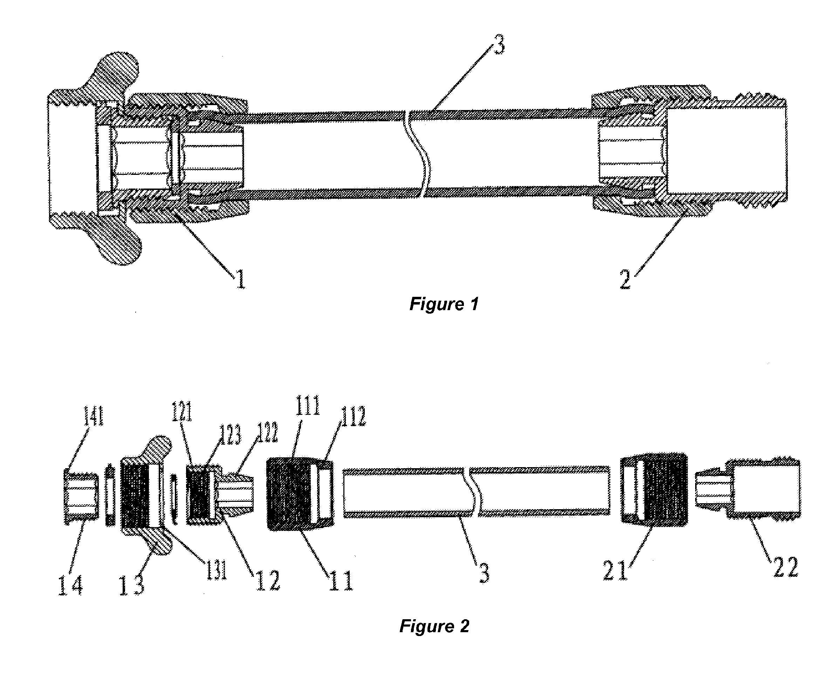

FIG 1 and FIG 2 show that the present invention comprises water intake connector (1), water output connector (2) and conduit body (3). The connection of conduit body (3) with water intake connector (1) and with water output connector (2) is detachable.

Wherein, the water intake connector (1) mainly includes the external cap (11) and the internal calipers (12). The external cap (11) includes the internal threads (111) and the internal projection (112). The minor diameter of the internal thread (111) is smaller than the external diameter of the conduit body (3), and the internal diameter of the internal projection (112) is almost equal to the external diameter of the conduit body (3). The internal calipers (12) include external threads (121) and external projection (122). The external threads (121) match the internal threads (111) of the external cap (11). The external projection (122) has a trapeziform axis cross section; the external diameter of its end is slightly smaller than the internal diameter of the conduit body (3) while the external diameter of its bottom is slighter greater than the internal diameter of the conduit body (3). The external cap (11) and the internal calipers (12) are bolted. The end of the conduit body (3) is clamped by the internal projection (121) and the external projection (122) and fixed between the external cap (11) and the internal calipers (12).

Preferably, the water intake connector (1) can also comprises the butterfly cap (13) connected via locking piece (14) with the internal calipers (12) to facilitate the connection between water intake connector (1) and water tap and locking. Its specific structure may be such that the external threads (121) of the internal calipers (12) at the water intake connector (1) is provided some internal threads (123) and the butterfly cap (13) provided with the calipers projection (131) at the connection with the internal calipers (12). The end cap (141) of the locking piece (14) is tightly appressed to and bolted with the calipers projection (131) and fixed by bolting its external threads with internal calipers (12). Wherein, gaskets can be provided at the connection between the locking piece (14) and butterfly cap (13) and at the connection between the locking piece (14) and the internal calipers (12) to prevent the connections from water leakage.

The water output connector (2) comprises external cap (21) and internal calipers (22) with the same structure as that of the external cap (11) and the internal calipers (12) of the water intake connector (1). The water output end of the conduit body (3) is clamped between the external cap (21) and internal calipers (22) of the water intake connector.

The above description is only a preferred embodiment of the present invention. In practice, any structure can be adopted according to the actual need to achieve the detachable connection between the external cap and internal calipers. Once the conduit body (3) fractures in use, disassemble the external cap and the internal calipers, remove the damage part of the conduit body (3), insert the end of the conduit body from the internal projection into the external cap, and screw the internal calipers into the external cap. As the internal calipers screw in, the external projection of the internal calipers will gradually go deep into the conduit body and prop open the end of the conduit body, and its co-action with the internal projection of the external cap to press and fix the end of the conduit body, so as to achieve the restored use of the fractured conduit body.

The above description is only a preferred embodiment of the present invention without restricting it in form. While the present invention has been particularly shown and described with reference to a preferred embodiment, it will be understood by those of ordinary skill in the art that various changes in form and details may be made based on the technique disclosed above to make equivalent embodiments with equal changes and shall remain with the scope of claims of the technical solution of the present invention.

## Claims

1. A diversion conduit, comprising of a water intake connector, a water output connector and a conduit body, **characterized by** that said water intake connector and water output connector each includes a detachably connected external cap and internal calipers, wherein the end of the conduit body is clamped between the external cap and internal calipers.

2. The diversion conduit according to claim 1, **characterized by** that said external cap includes internal threads and internal projection, wherein the minor diameter of the internal thread is smaller than the external diameter of the conduit body and the internal diameter of the internal projection is almost equal to the external diameter of the conduit body; and also **characterized by** that the internal calipers include external threads and external projection, wherein the external threads match the internal threads of the external cap, the external projection has a trapeziform axis cross section; the external diameter of its end is slightly smaller than the internal diameter of the conduit body while the external diameter of its bottom is slightly greater than the internal diameter of the conduit body; and also **characterized by** that the external cap and the internal calipers are bolted, and the end of the conduit body is clamped by the internal projection of the external cap and the external projection of the internal calipers.

3. The diversion conduit according to claims 1 and 2, **characterized by** that the water intake connector comprises a butterfly cap connected via locking piece with the internal calipers of the water intake connector.

4. The diversion conduit according to claim 3, **characterized by** that said water intake connector provided with internal threads and the butterfly cap provided with a calipers projection at the connection with the internal calipers, wherein the end cap of the locking piece is tightly appressed to and bolted with the calipers projection.

5. The diversion conduit according to claim 3, **characterized by** that gaskets are provided at the connection between the locking piece and the butterfly cap and at the connection between the locking piece and the internal calipers.
